# EUROPÄISCHE PATENTANMELDUNG

(11) **EP 0 989 355 A1**
(43) Veröffentlichungstag der Anmeldung: **29.03.2000**
(21) Anmeldenummer: 99118585.1
(22) Anmeldetag: 21.09.1999
(51) Int. Cl.: F21V 8/00

(54) **Leuchtband aus seitlich lumineszenten Fasern**

(30) Priorität: 21.09.1998 DE 29816869 U
(71) Anmelder: PSS Umwelttechnik Apparatebau GmbH, 06749 Bitterfeld (DE)
(72) Erfinder: Jährig, Mike Dipl.-Ing., 02625 Bautzen (DE)
(74) Vertreter: Kailuweit, Frank, Dr. Dipl.-Ing.

(57) **Zusammenfassung**

Das Leuchtband aus seitlich lumineszenten Fasern (8) besteht aus einer Anzahl zueinander parallel angeordneter Seitenlichtfasern (2) und ermöglicht die großflächige Ausleuchtung von Objekten. Vorteilhaft ist die flache Bauweise und die Verformbarkeit des bruchresistenten Lichtleiterverbundes. Die gute Verformbarkeit des Leuchtbandes und die daraus resultierende Möglichkeit der exakten Anpassung an vorhandene bauliche und konstruktive Gegebenheiten in den unterschiedlichsten Einsatzgebieten resultiert aus der gewebeartigen Struktur des Verbundes. Dabei bilden die das Seitenlicht abgebenden Fasern das Kettenmaterial des Gewebeverbundes.

## Beschreibung

Die Erfindung bezieht sich auf ein Leuchtband aus seitlich lumineszenten Fasern zur kontinuierlichen Ausleuchtung über ihre Länge.

Leuchtbänder werden beispielsweise für Leuchtschriften, Leuchtwerbung, Leuchtdekorationen, Lichtleitsysteme, Leuchtmarkierungen oder die Ausleuchtung langgestreckter Objekte, wie Rolltreppen und dergleichen, benötigt.

Es ist bekannt, Leuchtbänder durch eine Aneinanderreihung von Leuchtstoffröhren, Soffittenlämpchen oder LED's zu bilden. Abgesehen vom Verschaltungs- und Befestigungsaufwand, ergibt sich keine kontinuierliche Lichtabstrahlung, da zwischen den einzelnen Lampen immer Lücken auftreten, die für den Betrachter erkennbar bleiben. Zwar ist aus der DE 42 02 754 A1 schon eine Leuchte aus stabförmigen Lampenreihen bekannt, bei der die Lampen ineinander so übergreifend angeordnet sind, daß die Fassungen der Lampen durch das fassungsfreie Ende der jeweils nächsten Lampen abgedeckt werden, doch ist diese Anordnung nur für eine einzige Abstrahlrichtung wirksam. Es bleibt ferner das Problem der Befestigung, Verdrahtung und Auswechselung der Einzellampen.

Die angesprochenen Lichtquellen haben Glaskörper und sind deshalb bruchempfindlich. Die Wartung einer Anlage und der Austausch einzelner Lichtquellen ist aufwendig, insbesondere dann, wenn die Leuchtbänder schwer zugänglich sind, beispielsweise an Gebäudefassaden. Für den Einsatz in der Leuchtwerbung müssen bereits die einzelnen Leuchtstoffröhren exakt nach Plan entworfen und hergestellt werden. Nachträgliche Änderungen sind unmöglich.

In den letzten Jahren sind Beleuchtungssysteme unter Einsatz von Lichtleitfasern mit kontrolliertem seitlichem Lichtaustritt (Seitenlichtfasern) bekannt geworden. Lichteinspeisungen in einen verdrillten Seitenlichtstrang oder in ein Seitenlichtfaserbündel sind beispielsweise in der DE 196 15 516 A1 und der DE 296 19 113 U1 beschrieben.

Aktive und passive lumineszente Lichtleitfasern sind in den verschiedensten Variationen erhältlich und ermöglichen eine kontinuierliche seitliche Lichtabstrahlung über mehrere Meter. Beleuchtungseinrichtungen hieraus haben außerdem erhebliche verlege- und sicherheitstechnische Vorteile. Sie sind bruchunempfindlich. Zugleich wird die Wartung und der Austausch der Lichtquelle vereinfacht. Während bei Leuchtstoffröhren, Glühlampen und LED's das Leuchtmittel zugleich Entstehungsort oder Quelle des Lichtes ist, wird das Licht bei passiven Seitenlichtfasern durch eine externe Lichtquelle eingespeist, die sich örtlich getrennt vom Leuchtmedium, jedoch mit ihm verbunden, an einem für Wartung und Austausch leicht zugänglichen Ort befindet.

Als nachteilig erweist sich oft die im Querschnitt annähernd kreisrunde Form eines Faserbündels. Breitere Leuchtbänder erfordern somit einen größeren Durchmesser des Faserbündels. Die Ausleuchtung einer bestimmten Fläche ist damit abhängig von der Bau- oder Einbautiefe des Faserbündels. Eine optimale Flächenausleuchtung bei minimaler Bautiefe kann hierbei nicht erreicht werden. Ein weiteres Problem ist die flächige oder räumliche Verlegung eines Faserbündels. Da die Fasern herkömmlicher Faserbündel relativ starr zueinander fixiert sind, beispielsweise durch Verkleben oder Verschweißen, treten beim Installieren Risse und Spannungen auf, die bis zum Bruch überbeanspruchter Fasern führen.

Aufgabe vorliegender Erfindung ist es, eine Anordnung einer Mehrzahl paralleler Seitenlichtfasern zur großflächigen Ausleuchtung von Objekten zu finden, wobei insbesondere Wert auf eine extrem flache Bauweise und einen relativ flexiblen und damit extrem bruchunempfindlichen Lichtleiterverbund gelegt wird. Eine weitere Aufgabe ist es, nach Mustern, die beispielsweise am PC entworfen worden sind, unmittelbar das Leuchtband maschinell zu produzieren, wobei unter "Band" jedes werbtechnisch herstellbare Gebilde verstanden sein soll.

Die Aufgabe wird erfindungsgemäß durch das im Anspruch 1 angegebene Merkmal gelöst. Vorteilhafte Weiterentwicklungen sind in den begleitenden Unteransprüchen angegeben.

Erfindungsgemäß bilden hierzu die Seitenlicht abgebenden Fasern (Seitenlichtfasern) das Kettmaterial eines Gewebeverbundes. Dieses läßt sich computergesteuert maschinell herstellen, wobei Zuführungen, Abführungen oder Kurven einwebbar sind. Beliebig viele Einzelfasern verlaufen, verbunden duch Schußmaterial, parallel nebeneinander, wodurch ein Leuchtband im wesentlichen nur die Höhe einer einzelnen Seitenlichtfaser einnimmt, gegebenenfalls erweitert um ein Stützgewebe. Diese extrem flache Konstruktion ist selbst bei großflächigen Beleuchtungsaufgaben gegeben. Ein Wechsel im Farbenspiel ist bei Verwendung passiver Seitenlichtfasern sehr einfach durch Filter erreichbar, die zwischen der - ggf. fokussierten - Lichtquelle und der Seitenlichtfaser positioniert sind. Gegenüber herkömmlichen Beleuchtungsanlagen vereinfacht sich zugleich die Wartung und der Austausch der Lichtquelle, die an einem Ende, an mehreren Enden oder auch zwischen den Enden der Seitenlichtfasern angeordnet sein kann. Da das Gewebeband im Regelfall keine elektrischen Leitungen in der Kette mit sich führt und somit stromlos ist, gestaltet sich der Einsatz beispielsweise auch im Freien oder unter Wasser völlig problemlos.

Die Erfindung soll anhand eines Ausführungsbeispieles näher erläutert werden. In der zugehörigen Zeichnung zeigt:
- Fig. 1: ein Gewebeband 1 aus passiven Seitenlichtfasern und
- Fig. 2: ein im Bogen gewebtes Band aus einer Kombination von Tageslichtfasern und aktiven Seitenlichtfasern.

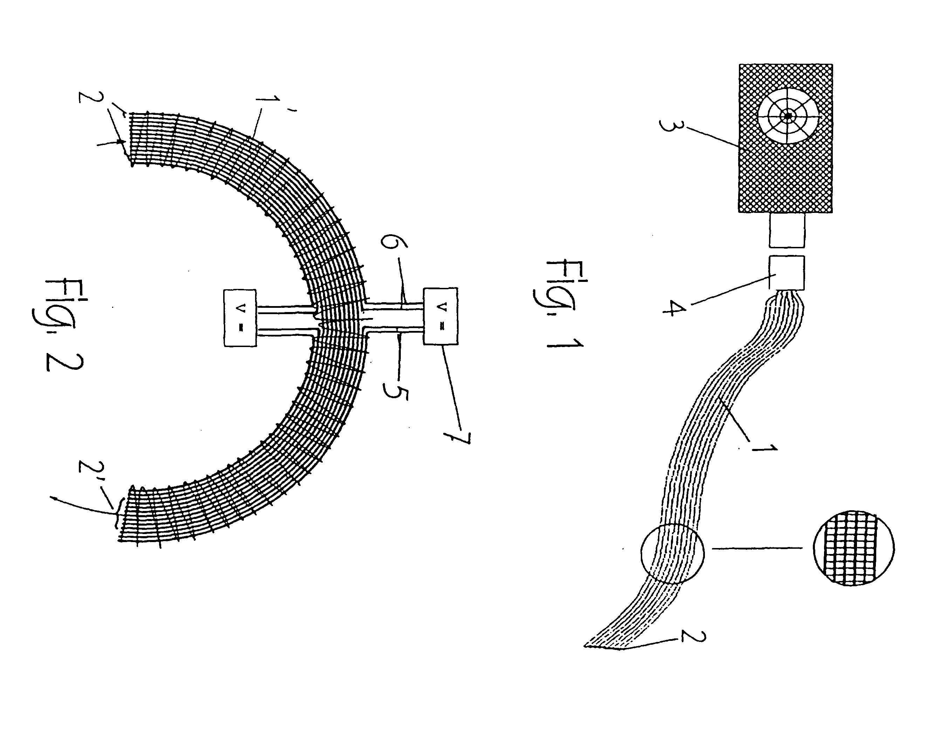

In das in Fig. 1 schematisch dargestellte Gewebeband 1 aus passiven Seitenlichtfasern 2 wird einseitig sichtbares Licht von einer Lichtquelle 3 über einen Endtopf 4 eingekoppelt. Das Gewebeband 1 ist extrem flach und äußerst flexibel und läßt sich deshalb auch ohne speziell eingewebte Kurven entsprechend seiner jeweiligen Breite relativ gut individuellen Verlegewünschen anpassen. Steht die Aufgabe, einen Schriftzug herzustellen, so kann beispielsweise ein "Y" entstehen, indem eine Gabel gewebt wird, für ein "U" wird eine Kurve eingewebt, für ein "H" wird ein Querbalken aus Seitenlichtfasern 2 in ein Stützgewebe eingewebt usw. Hierzu kann auf Verfahren verwiesen werden, die vom Anmelder in der DE 195 04 600 C2 vorveröffentlicht worden sind.

Es ist leicht ersichtlich, daß beinahe jedes beliebige Muster maschinenorientiert herstellbar wird und sich ein Gewebe gemäß der Erfindung u.a. hervorragend für figürliche Werbung eignet. Anstelle der Vorschaltung von Filtern oder ergänzend können die Seitenlichtfasern 2 selbst eingefärbt sein und je nach Farbvorlage aus- und wieder eingewebt werden. Auch sind Farbübergängen oder Dunkelstellen längs einer Seitenlichtfaser 2 denkbar. Ferner können in den Gewebeverbund ergänzend Tagesleuchtfasern eingewebt sein, die tagsüber die Funktion der nur im Dunkeln wahrnehmbaren Seitenlichtfasern 2 übernehmen oder für optische Zusatzeffekte sorgen.

Ein solches Beispiel zeigt Fig. 2. Ein nach der deutschen Patentanmeldung 198 16 666.4 des Anmelders gewebte Krümmung 1' besteht innen aus Kettmaterial in Tagesleuchtfarben. Diese Kettfasern 2' sind beispielsweise nach den Regenbogenfarben geordnet. Insgesamt ergibt sich folglich das Bild eines Regenbogens, da alle Kettfasern 2' mittels des Schußmaterials streng organisiert sind, das heißt, ihren Platz in der Kette nicht verlassen. Am Rande sind aktiv leuchtende Seitenlichtfasern 2 eingewebt, die über eingewebte Zu- und Abführungen 5, 6 von einer Spannungsquelle 7 mit Betriebsspannung versorgt werden und nachts- über leuchten.

Um filigrane Muster maschinell zu erzeugen, kann partiell lichtundurchlässiges Fasermaterial über die Seitenlichtfasern 2 oder zwischen die Seitenlichtfasern 2 und eine ausgewebte Partie gewebt werden.

Weiterhin ist es zur Erhöhung der Lichtausbeute oder Erzielung von Spezialeffekten möglich, lichtreflektierendes Material parallel zu den Seitenlichtfasern 2 einzuweben. Spezialeffekte ermöglichen ferner eingewebte optische Fasern, die ausschließlich am Faserende punktförmig Licht spenden. Diese Fasern können im übrigen auch als Lichtquelle 3 für Seitenlichtfasern 2 genutzt werden.

Es soll erwähnt sein, daß unter "Faser" Kettmaterial jeder nur webbaren Stärke verstanden sein soll.

## Patentansprüche

1. Leuchtband aus seitlich lumineszenten Fasern, dadurch gekennzeichnet, daß die Seitenlichtfasern (2) Kettmaterial eines Gewebes (1) bilden.

2. Leuchtband nach Anspruch 1, dadurch gekennzeichnet, daß die Seitenlichtfasern (2) aktiv oder passiv seitlich leuchtende Lichtleiter aus Kunststoff oder Glas sind und medienrein oder gemischt unter Anwendung einer oder mehrerer webtechnischen Bindungen verwebt sind.

3. Leuchtband nach Anspruch 1 oder 2, dadurch gekennzeichnet, daß Seitenlichtfasern (2) an einem Ende des Gewebes (1) zu einer Schlaufe verwebt sind.

4. Leuchtband nach einem der vorhergehenden Ansprüche, dadurch gekennzeichnet, daß mindestens eine Zu- und/oder Abführung (5, 6) mindestens einer Seitenlichtfaser (2) eingewebt ist.

5. Leuchtband nach einem der vorhergehenden Ansprüche, dadurch gekennzeichnet, daß mindestens eine Krümmung (1') im Uhrzeigersinn und/oder Gegenuhrzeigersinn in das Gewebe (1) eingewebt ist.

6. Leuchtband nach einem der vorhergehenden Ansprüche, dadurch gekennzeichnet, daß ein Träger in das Gewebe (1) eingewebt ist.

7. Leuchtband nach einem der vorhergehenden Ansprüche, dadurch gekennzeichnet, daß eine Lichtquelle (3) an einem Ende, an mehr als einem Ende und/oder zwischen Enden von Seitenlichtfasern (2) angeordnet ist.

8. Leuchtband nach einem der vorhergehenden Ansprüche, dadurch gekennzeichnet, daß zwischen Lichtquelle (3) und Einspeisetopf (4) ein wechselbarer Lichtfilter angeordnet ist.

9. Leuchtband nach einem der vorhergehenden Ansprüche, dadurch gekennzeichnet, daß eingefärbte Seitenlichtfasern (2) eingewebt sind.

10. Leuchtband nach einem der vorhergehenden Ansprüche, dadurch gekennzeichnet, daß zwischen Lichtquelle (3) und Einspeisetopf (4) eine Fokussierungsoptik angeordnet ist.

11. Leuchtband nach einem der vorhergehenden Ansprüche, dadurch gekennzeichnet, daß zwischen Seitenlichtfasern (2) Tagesleuchtmaterial (2') eingewebt ist.

12. Leuchtband nach einem der vorhergehenden Ansprüche, dadurch gekennzeichnet, daß partiell lichtundurchlässiges Kett- und/oder Schußmaterial eingewebt ist.

13. Leuchtband nach einem der vorhergehenden Ansprüche, dadurch gekennzeichnet, daß zwischen Seitenlichtfasern (2) lichtreflektierendes Kettmaterial eingewebt ist.

14. Leuchtband nach einem der vorhergehenden Ansprüche, dadurch gekennzeichnet, daß Lichtleitfasern eingewebt sind, die nur endseitig Licht emittieren.

15. Leuchtband nach Anspruch 15, dadurch gekennzeichnet, daß endseitig lichtemittierende Lichtleitfasern eine Lichtquelle (3) für Seitenlichtfasern (2) bildet.

16. Leuchtband nach einem der vorhergehenden Ansprüche, gekennzeichnet durch eine Kombination übereinandergewebter Lagen unterschiedlicher Eigenschaften und Konfiguration.
